# EUROPEAN PATENT APPLICATION

(11) **EP 2 717 187 A1**
(43) Date of publication of application: **09.04.2014**
(21) Application number: 12789815.3
(22) Date of filing: 22.05.2012
(51) Int. Cl.: G06F 21/24

(54) **INFORMATION PROCESSING SYSTEM, ACCESS RIGHTS MANAGEMENT METHOD, INFORMATION PROCESSING DEVICE, AND CONTROL METHOD AND CONTROL PROGRAM THEREFOR**

(30) Priority: 24.05.2011 JP 2011116369
(71) Applicant: NEC Corporation, Tokyo 108-8001 (JP)
(72) Inventor: TAKAYANAGI, Nao, Tokyo 108-8001 (JP); MATSUDA, Naohisa, Tokyo 108-8001 (JP)
(74) Representative: Betten & Resch
(86) International application number: PCT/JP2012/003347
(87) International publication number: WO 2012/160814

(57) **Abstract**

Provided is an information processing apparatus including an application interface and a device interface, generated on the basis of each application, which are associated with each other. The information processing apparatus includes an access right table for storing whether the each application has an access right to a device connected to the information processing apparatus, and an access control unit that controls access between the application interface and the device interface with reference to the access right table.

## Description

### TECHNICAL FIELD

The invention relates to a technique that manages an access right to a plurality of devices from an application.

### BACKGROUND ART

In the above technical field, Patent Document 1 discloses a remote management method of a machine to be controlled by an authorized user by using an internet protocol multimedia subsystem (IMS) as an interface, which is an existing standard. In Patent Document 1, interaction between the user and the machine is realized by installing an IMS client in both the user and the machine.

### RELATED DOCUMENT

### PATENT DOCUMENT

[Patent Document 1] PCT Japanese Translation Patent Publication No.2008-543137

### DISCLOSURE OF THE INVENTION

However, in the above related art, since a relationship between the IMS clients is defined on the basis of authority of each user to each machine, it is not possible to manage access rights (corresponding to authorities) while independently handling a plurality of applications (corresponding to users) and a plurality of devices (corresponding to machines to be controlled).

An object of the invention is to provide a technique for solving the above-described problems.

In order to achieve the above object, an information processing apparatus according to the invention includes an application interface and a device interface, generated on the basis of each application, which are associated with each other, an access right table that stores whether each application has an access right to a device connected to the information processing apparatus, and an access control unit that controls access between the application interface and the device interface with reference to the access right table.

In order to achieve the above object, a method of controlling an information processing apparatus that includes an application interface and a device interface, generated on the basis of each application, which are associated with each other, the method includes an access control step of controlling access between the application interface and the device interface, with reference to an access right table for storing whether each application has an access right to a device connected to the information processing apparatus.

In order to achieve the above object, according to the invention, there is provided a control program of an information processing apparatus that includes an application interface and a device interface, generated on the basis of each application, which are associated with each other. The control program causes a computer to execute an access control step of controlling access between the application interface and the device interface, with reference to an access right table for storing whether each application has an access right to a device connected to the information processing apparatus.

In order to achieve the above object, according to the invention, there is provided an information processing system that manages an access right to a plurality of devices from an application. The information processing system includes a plurality of applications, the plurality of devices, an application interface and a device interface that are generated on the basis of each application and are associated with each other, an access right table that stores whether each application has an access right to the plurality of devices, and an access control unit that controls access between the application interface and the device interface with reference to the access right table.

In order to achieve the above object, according to the invention, there is provided an access right management method of managing an access right to a plurality of devices from an application in an information processing system including a plurality of applications and the plurality of devices. The access right management method includes a generation step of generating an application interface and a device interface that are associated with each other based on each application, and an access control step of controlling access between the application interface and the device interface, with reference to an access right table for storing whether each application has an access right to the plurality of devices.

According to the invention, it is possible to manage access rights while independently handling a plurality of applications and a plurality of devices.

### BRIEF DESCRIPTION OF THE DRAWINGS

The above-described objects, other objects, features and advantages will be further apparent from the preferred embodiments described below, and the accompanying drawings as follows.

FIG. 1 is a block diagram showing a configuration of an information processing apparatus according to a first embodiment of the invention.
FIG. 2A is a diagram showing an example of an operation of an information processing apparatus according to a second embodiment of the invention.
FIG. 2B is a diagram showing an example of an operation of the information processing apparatus according to the second embodiment of the invention.
FIG. 3 is a block diagram showing a functional configuration of the information processing apparatus according to the second embodiment of the invention.
FIG. 4 is a block diagram showing a hardware configuration of the information processing apparatus according to the second embodiment of the invention.
FIG. 5 is a diagram showing a configuration f an access right table according to the second embodiment of the invention.
FIG. 6 is a flow chart showing a flow of processing of the information processing apparatus according to the second embodiment of the invention.
FIG. 7A is a block diagram showing a functional configuration for generating an interface in an information processing apparatus according to a third embodiment of the invention.
FIG. 7B is a diagram showing an example of generating an interface/database in the information processing apparatus according to the third embodiment of the invention.
FIG. 7C is a diagram showing an example of generating a processing unit of device information in the information processing apparatus according to the third embodiment of the invention.
FIG. 8 is a diagram showing an application example of an information processing apparatus according to a fourth embodiment of the invention.
FIG. 9 is a diagram showing an application example of an information processing apparatus according to a fifth embodiment of the invention.

### DESCRIPTION OF EMBODIMENTS

Hereinafter, exemplary embodiments of the invention will be described in detail with reference to the drawings. However, components described in the following embodiments are just examples, and the technical scope of the invention is not limited thereto.

### [First Embodiment]

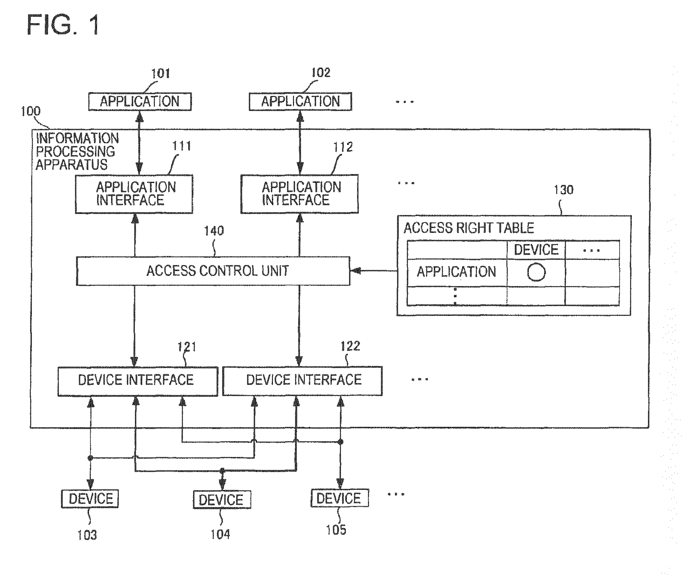

An information processing apparatus 100 as a first embodiment of the invention will be described with reference to FIG. 1 below. The information processing apparatus 100 is an apparatus that includes, application interfaces 111 and 112 and device interfaces 121 and 122 which are generated on the basis of applications 101 and 102 and are associated with each other.

As shown in FIG. 1, the information processing apparatus 100 includes an access right table 130 and an access control unit 140. The access right table 130 stores whether the applications 101 and 102 have access rights to devices 103 to 105 connected to the information processing apparatus 100. In addition, the access control unit 140 controls access between the application interfaces 111 and 112 and the device interfaces 121 and 122 with reference to the access right table 130.

Based on the above configuration, it is possible to manage access rights while independently handling the plurality of applications 101 and 102 and the plurality of devices 103 to 105.

### [Second Embodiment]

### Operation of Information Processing System

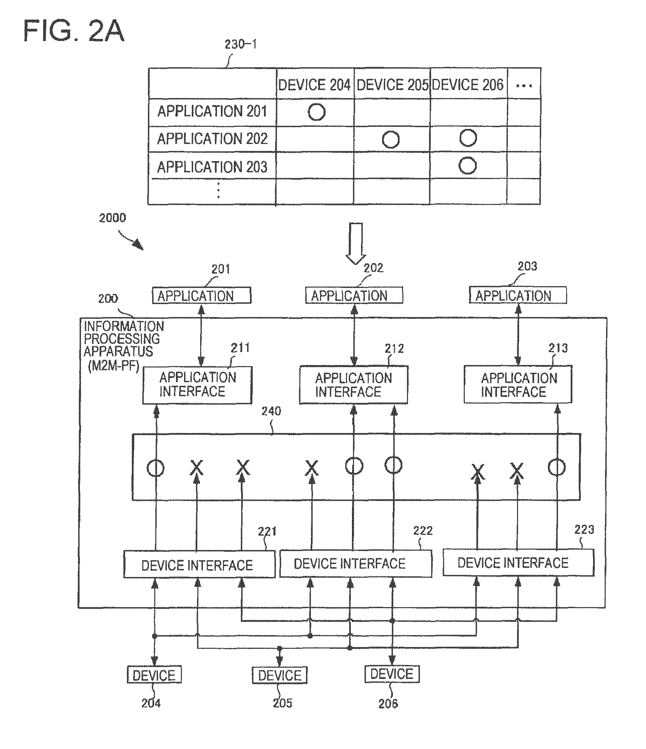

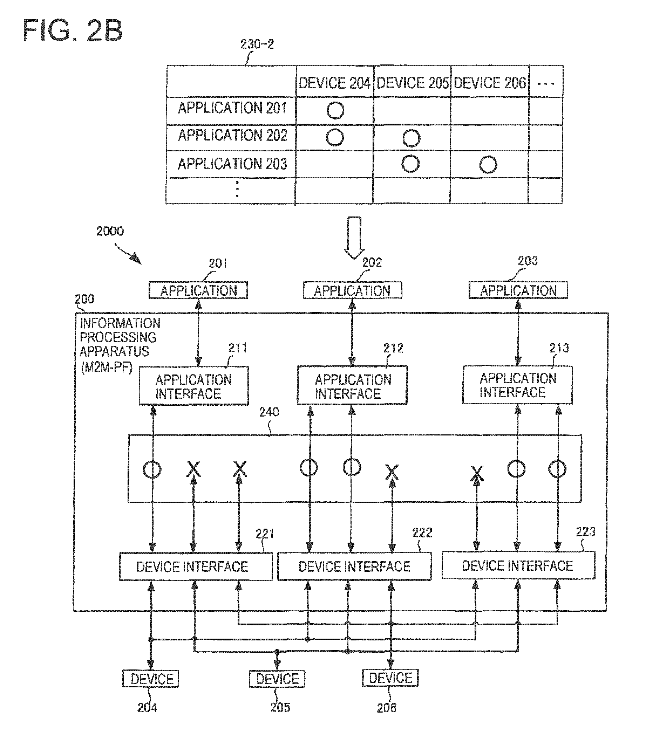

Next, operations of an information processing system 2000 according to a second embodiment of the invention will be described with reference to FIGS. 2A and 2B. FIG. 2A is a diagram showing operations when an access right between an application and a device is controlled using an access right table 230-1 for managing an access right. FIG. 2B is a diagram showing operations when an access right between an application and a device is controlled using an access right table 230-2.

In FIG. 2A, device interfaces 221 to 223 read device respective information from devices 204 to 206. On the other hand, application interfaces 211 to 213 acquire device information from the device interfaces 221 to 223 in response to requests from applications 201 to 203. At this time, an access control unit 240 restricts device information that can be accessed by the application interfaces 211 to 213, on the basis of access right information of the access right table 230-1. That is, in FIG. 2A, as a result, a device that can be accessed by the application 201 is restricted to the device 204, a device that can be accessed by the application 202 is restricted to the devices 205 and 206, and a device that can be accessed by the application 203 is restricted to the device 206.

On the other hand, similarly, in FIG. 2B, the device interfaces 221 to 223 read respective device information from the devices 204 to 206. The application interfaces 211 to 213 then acquire device information from the device interfaces 221 to 223 in response to requests from the applications 201 to 203. At this time, the access control unit 240 restricts device information that can be accessed by the application interfaces 211 to 213, on the basis of access right information of the access right table 230-2. That is, in FIG. 2B, as a result, a device that can be accessed by the application 201 is restricted to the device 204, a device that can be accessed by the application 202 is restricted to the devices 204 and 205, and a device that can be accessed by the application 203 is restricted to the devices 205 and 206.

### Functional Configuration of Information Processing system

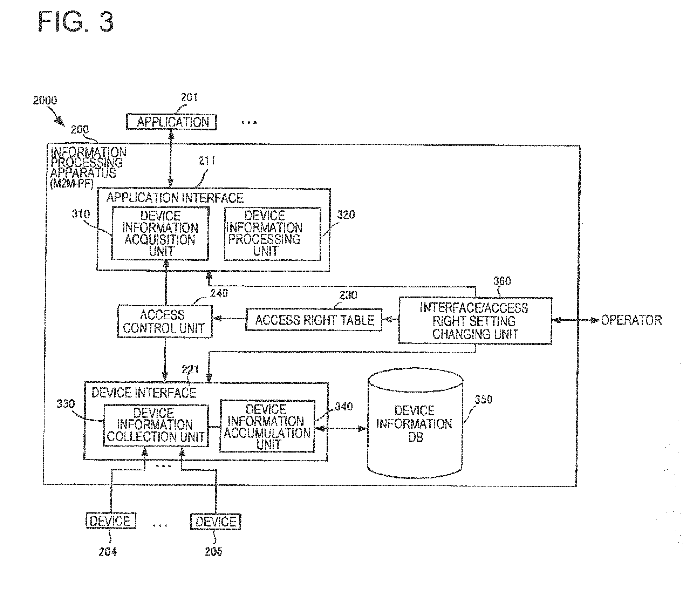

FIG. 3 is a diagram showing a functional configuration of the information processing system 2000. The information processing system 2000 includes an information processing apparatus 200, the application 201, and the devices 204 and 205.

The information processing apparatus 200 includes an application interface 211, an access right table 230, an access control unit 240, an interface/access right setting changing unit 360, a device interface 221, and a device information database (hereinafter, DB) 350.

In addition, the application interface 211 includes a device information acquisition unit 310 and a device information processing unit 320, and the device interface 221 includes a device information collection unit 330 and a device information accumulation unit 340.

An operator sets up the application interface 211, the device interface 221, and the access right table 230 in the information processing apparatus 200 through an interface/access right setting changing unit 360.

The device information collection unit 330 collects device information from the devices 204 and 205 and transmits the device information to the device information accumulation unit 340. The device information accumulation unit 340 accumulates the device information collected by the device information collection unit 330 in the device information DB 350.

The device information acquisition unit 310 acquires device information restricted by the access control unit 240 on the basis of access right information that is set in the access right table 230, and transmits the device information to the device information processing unit 320. The device information processing unit 320 processes the device information according to a request from the application 201, and transmits the device information to the application 201. The contents of the processing performed by the device information processing unit 320 are set in advance in response to the application 201.

### Hardware Configuration of Information Processing Apparatus

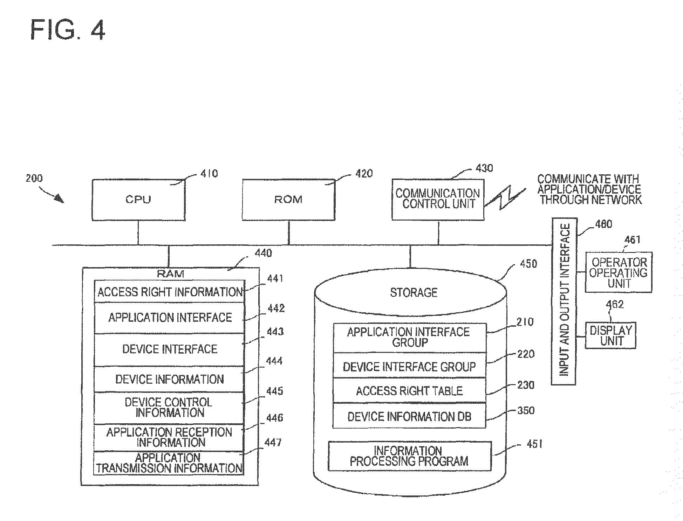

FIG. 4 is a block diagram showing a hardware configuration of the information processing apparatus 200. In FIG. 4, the information processing apparatus 200 includes a CPU 410, a ROM 420, a communication control unit 430, a RAM 440, and storage 450.

The CPU 410 is a central processing unit and controls the whole information processing apparatus 200 by executing various programs. The ROM 420 is a read only memory and stores various parameters and the like in addition to a boot program to be initially executed by the CPU 410. The communication control unit 430 controls communication with another terminal through a network. In addition, the RAM 440 is a random access memory and has various storage areas. The storage 450 stores a program in addition to a data group or a database. The information processing apparatus 200 further includes an input and output interface 460, and is connected to an operator operating unit 461 and a display unit 462 through the input and output interface 460.

The RAM 440 has an area for storing access right information 441, an application interface 442, and a device interface 443 which are input in response to an operator's operation with respect to the operator operating unit 461. These pieces of information are set up, and are stored as an application interface group 210, a device interface group 220, and an access right table 230 in the storage 450.

The RAM 440 also has an area for temporarily storing device information 444 collected from a device, and the device information 444 is accumulated in the device information DB 350 of the storage 450.

The RAM 440 further includes a storage area for storing device control information 445 for controlling a device, application reception information 446 received from an application, and application transmission information 447 to be transmitted to the application.

On the other hand, the storage 450 stores an information processing program 451. The CPU 410 implements functional configurations of FIG. 3 by reading out and executing the information processing program 451, various interface groups 210 and 220, or the like.

### Configuration of Access Right Table

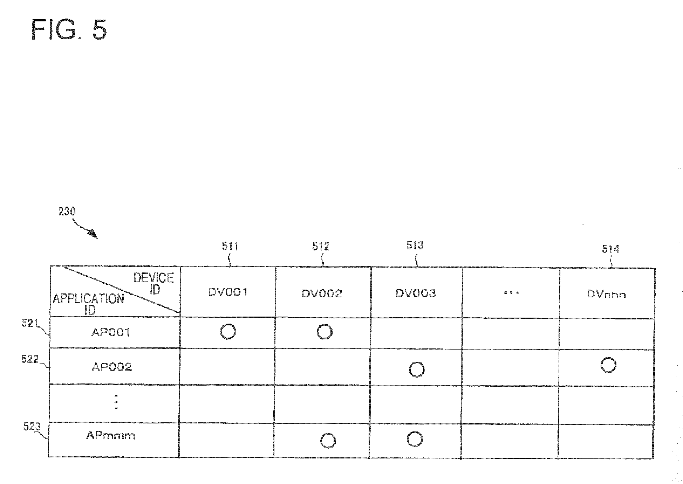

FIG. 5 is a diagram showing an example of the access right table 230. Access rights between applications represented by application IDs 521 to 523 and devices represented by device IDs 511 to 514 are set by the access right table 230. For example, since o is marked in a cell indicating a correspondence relationship between a device DV001 and an application AP001, it can be seen that the application AP001 has an access right to the device DV001. Similarly, according to the access right table 230, it can be seen that the application AP001 also has an access right to a device DV002 and an application AP002 has an access right to a device DV003 and a device DVnnn. Further, it can be seen that an application APmmm has an access right to the device DV002 and the device DV003.

### Flow of Processing of Information Processing Apparatus

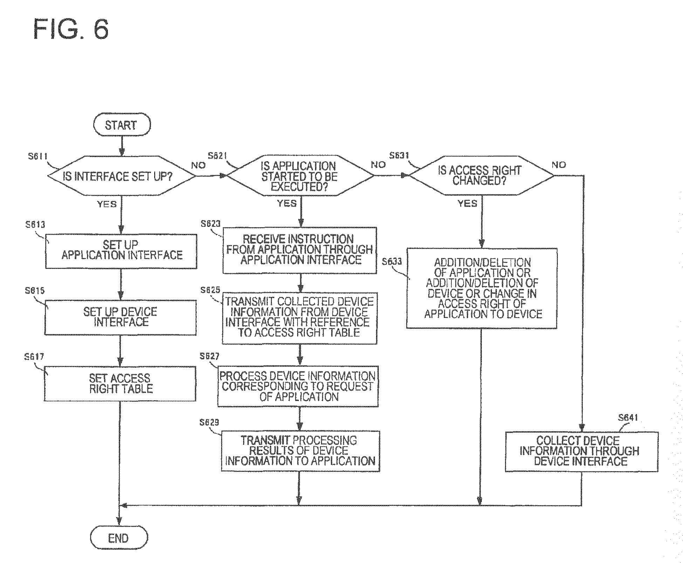

FIG. 6 is a flow chart showing a flow of processing of the information processing apparatus 200.

The information processing apparatus 200 determines in step S611 whether an instruction for setting up of an interface is input, determines in step S621 whether an instruction for starting to execute the application 201 is received, and determines in step S631 whether an instruction for changing an access right is input. Meanwhile, in FIG. 6, for convenience of description, the determinations are performed in the order of S611, S621, and S631. However, this is just an example, and these determinations can be performed in an arbitrary order.

When the interface/access right setting changing unit 360 receives an instruction for setting up the interface 201 from an operator, the interface/access right setting changing unit 360 proceeds to step S613 from step S611 and performs a set up process of the application interface 211. For example, the interface/access right setting changing unit 360 associates each application with the application interface 211 on the basis of an operator's input, information that is determined in advance, or the like. The interface/access right setting changing unit 360 then performs a set up process of the device interface 221 in step S615. For example, the interface/access right setting changing unit 360 associates each device connected to the information processing apparatus 200 with the device interface 221, on the basis of an operator's input, information that is determined in advance, or the like. Further, the interface/access right setting changing unit 360 performs setting of the access right table 230 in step S617. Here, as described previously, the interface/access right setting changing unit 360 sets with respect to what device the application 201 has an access right.

On the other hand, when an instruction for starting to execute an application is received from the application 201, the process proceeds to step S623 from step S621, and thus the device information acquisition unit 310 receives a detailed instruction from the application 201 through the application interface 211. Then, in step S625, the access control unit 240 specifies a device in which the application 201 has an access right, with reference to the access right table 230 before the device information acquisition unit 310 acquires device information. The device information acquisition unit 310 acquires the device information collected by the device that is specified by the access control unit 240 through the device interface 221. Subsequently, in step S627, the device information processing unit 320 performs processing of device information corresponding to a request from the application 201. Further, in step S629, the information processing apparatus 200 transmits the processing results of the device information to the application 201 through the application interface 211.

In step S631, when an operator inputs an instruction for changing the access right table 230, the process proceeds to step S633. Then, the interface/access right setting changing unit 360 performs addition or deletion of the application 201 with respect to the access right table 230, addition or deletion of a device with respect to the access right table 230, or changes of an access right from the application 201 to each device, in response to the instruction.

Further, in a case of NO in any determination step of step S611, step S621, and step S631, the process proceeds to step S641, and thus the device information collection unit 330 performs collection of device information through the device interface 221. The device information accumulation unit 340 accumulates the device information collected by the device information collection unit 330 in the device information DB 350.

Meanwhile, FIG. 6 shows only data or programs which are essential for the embodiment, and does not show general-purpose data or programs such as an OS.

As described above, according to the embodiment, it is possible to manage access rights while independently handling a plurality of applications and a plurality of devices by controlling the access rights between the applications and the devices, using the access right table 230.

### [Third Embodiment]

### Operation of Information Processing System

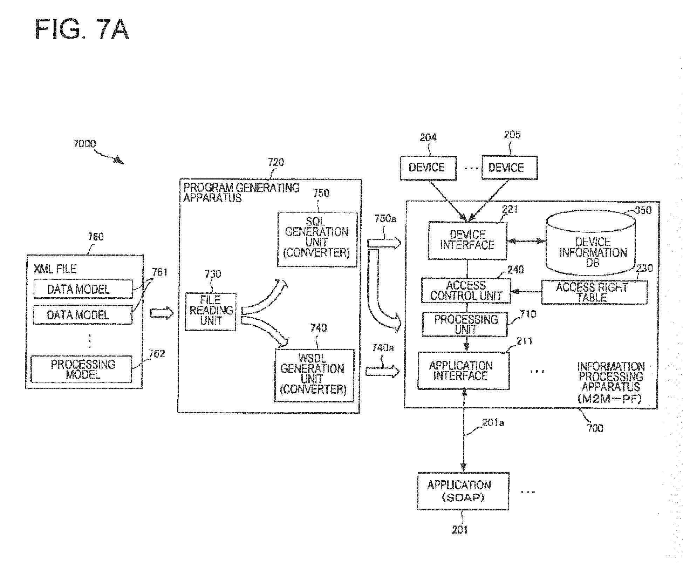

Next, an information processing system 7000 according to a third embodiment of the invention will be described with reference to FIG. 7A. FIG. 7A is a diagram showing operations of the information processing system 7000 according to the embodiment.

The information processing system 7000 according to the embodiment is different from that of the second embodiment in that an information processing apparatus 700 includes a processing unit 710. The processing unit 710 processes device information which is transmitted from the device interface 221 and of which the transmission is restricted by the access control unit 240 in response to the setting of the access right table 230. The processing unit 710 transmits the processed device information to the application interface 211. Other configurations and operations of the application 201, the devices 204 and 205, and the information processing apparatus 700 are the same as those of the second embodiment, and thus the description thereof will not be repeated by attaching the same reference numerals and signs.

Further, the information processing system 7000 includes a program generating apparatus 720 that generates the application interface 211, the device interface 221, and the processing unit 710. The program generating apparatus 720 includes a file reading unit 730, an SQL generation unit 750, and a WSDL generation unit 740. The file reading unit 730 reads an XML file 760 described in an extensible markup language (XML). The SQL generation unit 750 describes processing through the device interface 221 including a database structure through a structured English query language (SQL) or the processing unit 710, on the basis of the description of the XML file 760. The WSDL generation unit 740 describes the application interface (API) 211 through a web services description language (WSDL), on the basis of the description of the XML file 760. Meanwhile, the application interface (API) 211 is published, which results in a support for the creation of the application 201.

The XML file 760 includes a data model 761 for defining device information accumulated in the device information DB 350, and a processing model 762 for defining processing of the processing unit 710 that processes the device information. Further, the XML file may include other models described in an XML.

Meanwhile, in the embodiment, the XML file 760 described in an XML is input, the device interface 221 described in an SQL or the processing unit 710 are generated, and the application interface 211 described in a WSDL is generated. However, a language of an input file or a language of a generation program is not limited to the embodiment. In the embodiment, an XML having a simple definition of a data model is selected for an input, and a description language SQL is selected for a database structure, and a description language WSDL of a web service is selected as the application interface 211. A generation language for implementing functional configuration units may be determined, and an input language suitable for the generation language may be selected, according to what is to be implemented in the information processing apparatus 700.

### Generation of Interface/Database

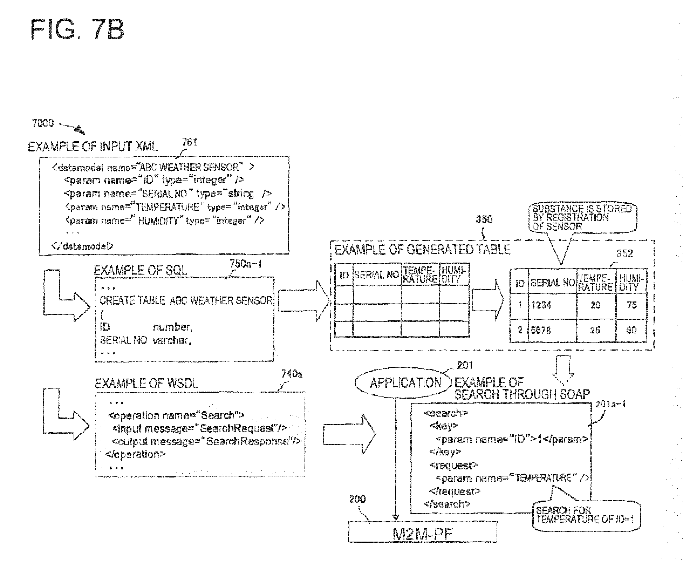

FIG. 7B is a diagram showing an example of generating an interface/database in the information processing system 7000 according to the embodiment.

An example of an input XML shows the data model 761. The data model 761 has a model name of "ABC weather sensor", and includes "temperature" of an integer, "humidity" of an integer, and the like in association with "ID" of an integer and "serial No" of a character string.

An SQL description 750a-1 is generated by the SQL generation unit 750 from the data model 761 described in an XML. An empty table 351 is generated in the device information DB 350 by the SQL description 750a-1. Then, the empty table is changed to a table 352 in which temperature and humidity are accumulated by collecting device information from devices.

On the other hand, a WSDL description 740a is generated by the WSDL generation unit 740 from the data model 761 described in an XML. An input message from the application 201 and an output message to the application 201 are defined as the application interface 211 in the WSDL description 740a.

In this manner, the application interface 211 and the device interface 221 of the information processing apparatus 700 are generated by the program generating apparatus 720, and are set up.

With respect to the information processing apparatus 700, a search request 201a-1 through a simple object access protocol (SOAP) for searching for temperature of ID=1 is transmitted to the application interface 211 from the application 201. That is, the application 201 can search for necessary data without having to consider processing after the application interface.

### Generation of Processing Unit

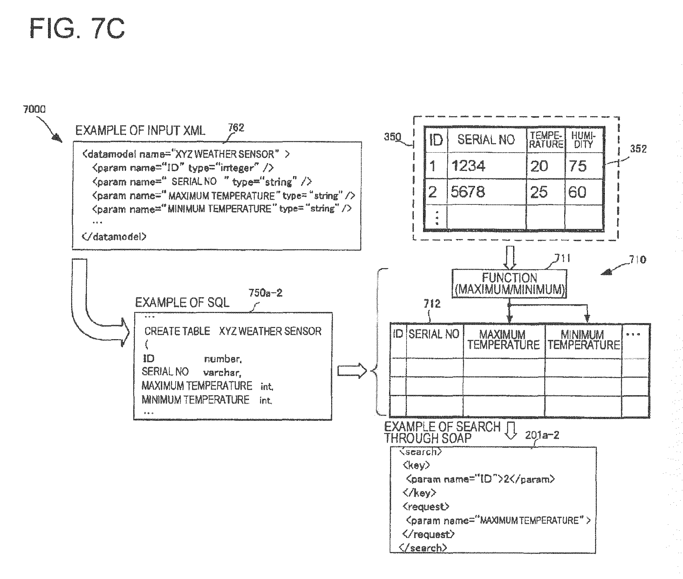

FIG. 7C is a diagram showing an example of generating a processing unit of device information in the information processing system 7000 according to the embodiment. FIG. 7C is executed in addition to the processing of FIG. 7B.

An example of an input XML shows the processing model 762. The processing model 762 has a model name of "XYZ weather sensor", and includes "maximum temperature" of an integer, "minimum temperature" of an integer, and the like in association with "ID" of an integer and "serial No" of a character string.

An SQL description 750a-2 is generated by the SQL generation unit 750 from the processing model 762 described in an XML. The processing unit 710 is generated by the SQL description 750a-2, which is constituted by a function 711 for finding maximum temperature/minimum temperature by reading out temperature from the table 352 of the device information DB 350 and an empty table 712 having an area for storing the maximum temperature and the minimum temperature. Then, temperature and humidity are accumulated by collecting device information from devices.

In this manner, at the same time when the application interface 211 and the device interface 221 of the information processing apparatus 700 are generated by the program generating apparatus 720 and are set up, the processing unit 710 is generated and set up.

With respect to the information processing apparatus 700, a search request 201a-2 through an SOAP for searching for maximum temperature of ID=2 is transmitted to the application interface 211 from the application 201. That is, the application 201 can search for processed data without having to consider processing after the application interface.

### [Fourth Embodiment]

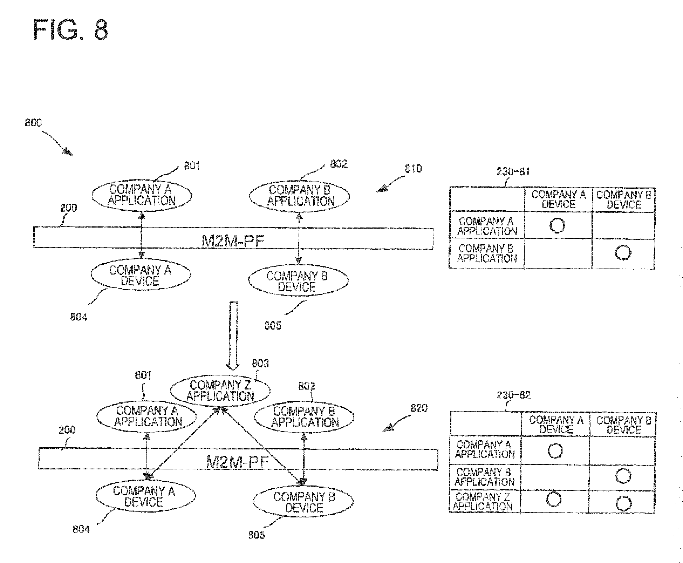

Next, operations of an information processing system 800 according to a fourth embodiment of the invention will be described with reference to FIG. 8. FIG. 8 is a diagram showing an application example of the information processing apparatus 200 according to the embodiment. For example, FIG. 8 is an example of a case where information of a company A device 804 is occupied by a company A application 801 and information of a company B device 805 is occupied by a company B application 802.

Meanwhile, in the embodiment, an access right to each device which is included in an application is set on the basis of information indicating whether each device connected to the information processing apparatus 200 receives a service of the application. For example, the information indicating whether each device receives a service of the application may be previously set in the information processing apparatus 200 or may be added to registration information of the application.

Reference numeral 810 of FIG. 8 denotes the above-described premise state. FIG. 8 shows a state where an M2M-PF which is the information processing apparatus 200 has an access right table 230-81, the company A application 801 occupies the company A device 804, and the company B application 802 occupies the company B device 805.

Reference numeral 820 of FIG. 8 denotes a state where a company Z application 803 having no device is launched. The company Z application 803 has an access right to both the company A device 804 and the company B device 805. In this case, the access right table 230-82 shows that a new company Z application 803 obtains an access right to the company A device 804 and the company B device 805. The access right is considered to be set, for example, when owners of the company A device 804 and the company B device 805 make a contract or registration with respect to a service of the company Z application 803. Here, when the company Z application 803 is registered in the information processing system 800, the information processing apparatus 200 adds in advance information indicating that the company A device 804 and the company B device 805 receive the service from the company Z application 803 to the registration information of the company Z application 803, for example, by an input from an operator, or the like. Thereby, when the company Z application 803 is added to the information processing apparatus 200, it is possible to create the access right table 230-82 in which the company Z application 803 has an access right to both the company A device 804 and the company B device 805. In addition, for example, when another company C device is connected to the information processing apparatus 200 and thus does not make a contract in which the company C device receives a service from the company Z application, the information processing apparatus 200 adds in advance information indicating that only the company A device 804 and the company B device 805 receive a service from the company Z application 803 to the registration information of the company Z application 803. Thus, it is possible to create the access right table 230-82 showing a state where the company Z application 803 has no access right to the company C device.

In addition, when a new device is added to the information processing system 800, it is possible to add information indicating whether the new device receives a service from an existing application to registration information of the new device. Thereby, it is possible to add information indicating access rights in the existing application and the new device to the access right table 230-82.

In this manner, according to the embodiment, it is possible to provide a service to a device and to collect information from a device by connection to an M2M-PF without having a device. In addition, even when only a device is newly added, it is possible to receive a service from an existing application.

### [Fifth Embodiment]

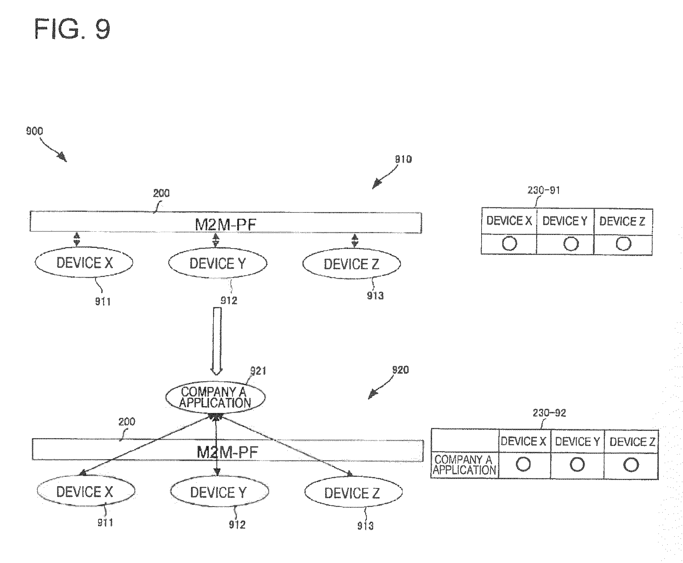

Next, operations of an information processing system 900 according to a fifth embodiment of the invention will be described with reference to FIG. 9. FIG. 9 is a diagram showing an application example of the information processing apparatus 200 according to the embodiment. For example, FIG. 9 is an example of a case where only a device X 911 to a device Z 913 are connected to the M2M-PF which is the information processing apparatus 200 and an application is not connected thereto.

Meanwhile, in the embodiment, an access right to each device which is included in an application is set on the basis of information indicating whether each device connected to the information processing apparatus 200 sets the access right in the application without conditions.

Reference numeral 910 of FIG. 9 denotes the above-described premise state. FIG. 9 shows a state where the M2M-PF which is the information processing apparatus 200 has an access right table 230-91 but only the device X 911 to the device Z 913 are connected to the M2M-PF.

Reference numeral 920 of FIG. 9 denotes a state where a company A application 921 having no device is launched. The company A application 921 has an access right to all the device X 911 to the device Z 913. In this case, an access right table 230-92 shows that a new company A application 921 obtains an access right to all the devices. The access right is considered to be set, for example, when any of the device X 911 to the device Z 913 has no specific private owner and are public devices or devices that can be used by anyone. Here, the information processing apparatus 200 can create the access right table 230-92 indicating an access right of a newly launched application by holding in advance information indicating whether each device sets an access right to the newly launched application without conditions. In the embodiment, anyone can use any of the device X 911, the device Y 912, and the device Z 913. For this reason, the information processing apparatus 200 has information indicating that these devices set an access right to the newly launched application without conditions. Thus, when the company A application 921 is launched in the information processing system 900, it is possible to create the access right table 230-92 in which the company A application has an access right to the device X 911, the device Y 912, and the device Z 913.

In addition, when a new device is added to the information processing system 900, it is possible to add information indicating whether the new device sets an access right to each application without conditions to registration information of the new device. Thereby, it is possible to add the new device and add information indicating access rights in an existing application and the new device to the access right table 230-92.

In this manner, according to the embodiment, it is possible to provide a service to a device having no private owner and to collect information from a device by only connecting an application to an M2M-PF.

### [Other Embodiment]

So far, the embodiments of the invention have been described, but a system or an apparatus in which various characteristics included in each of the embodiments are combined in various ways is also included in the scope of the invention.

In addition, the invention may be applied to a system constituted by a plurality of devices, or may be applied to a single apparatus. Further, the invention can also be applied in a case where a control program for implementing functions of an embodiment is directly or remotely provided to a system or an apparatus. Therefore, in order to implement the functions of the invention using a computer, a control program installed in the computer, a medium storing the control program, and a world wide web (WWW) server causing the control program to be downloaded are included in the scope of the invention.

The application is based on Japanese Patent Application No. 2011-116369 filed on May 24, 2011, the content of which is incorporated herein by reference.

## Claims

1. An information processing apparatus including an application interface and a device interface, generated on the basis of each application, which are associated with each other, the information processing apparatus comprising:
an access right table that stores whether each application has an access right to a device connected to the information processing apparatus; and
an access control unit that controls access between the application interface and the device interface with reference to the access right table.

2. The information processing apparatus according to claim 1, further comprising:
a generation unit that generates a new application interface and a new device interface in association therewith, in response to a new application when the new application is added; and
an application addition unit that adds the new application interface and the new device interface to the information processing apparatus,
wherein the application addition unit adds data to the access right table, the data indicating whether the new application has an access right to the device connected to the information processing apparatus.

3. The information processing apparatus according to claim 1 or 2, further comprising a device addition unit that adds data to the access right table, the data indicating whether each application has an access right to a new device, when the new device is added.

4. The information processing apparatus according to any one of claims 1 to 3, further comprising an access right changing unit, when an access right to the device of the application is changed, which changes data of the access right table which indicates whether the application has an access right in accordance with a change in the access right.

5. The information processing apparatus according to any one of claims 1 to 4, wherein the device interface includes an accumulation unit that accumulates data collected from the device in a database.

6. The information processing apparatus according to any one of claims 1 to 5, further comprising an input unit that inputs data for managing the information processing apparatus,
wherein the registration of the application and the device and data setting of the access right table are performed through the input unit.

7. The information processing apparatus according to any one of claims 1 to 6, wherein an access right to the device of the application is set on the basis of information indicating whether each device connected to the information processing apparatus receives a service of the application.

8. The information processing apparatus according to any one of claims 1 to 6, wherein an access right to the device of the application is set on the basis of information indicating whether the device sets an access right to the application without conditions.

9. A method of controlling an information processing apparatus that includes an application interface and a device interface, generated on the basis of each application, which are associated with each other, the method comprising: an access control step of controlling access between the application interface and the device interface, with reference to an access right table for storing whether each application has an access right to a device connected to the information processing apparatus.

10. A control program of an information processing apparatus that includes an application interface and a device interface, generated on the basis of each application, which are associated with each other, the control program causing a computer to execute an access control step of controlling access between the application interface and the device interface, with reference to an access right table for storing whether each application has an access right to a device connected to the information processing apparatus.

11. An information processing system that manages an access right to a plurality of devices from an application, the system comprising:
a plurality of applications;
the plurality of devices;
an application interface and a device interface that are generated on the basis of each application and are associated with each other;
an access right table that stores whether each application has an access right to the plurality of devices; and
an access control unit that controls access between the application interface and the device interface with reference to the access right table.

12. An access right management method of managing an access right to a plurality of devices from an application in an information processing system including a plurality of applications and the plurality of devices, the method comprising:
a generation step of generating an application interface and a device interface that are associated with each other based on each application; and
an access control step of controlling access between the application interface and the device interface, with reference to an access right table for storing whether each application has an access right to the plurality of devices.
